# EUROPEAN PATENT APPLICATION

(11) **EP 4 242 811 A1**
(43) Date of publication of application: **13.09.2023**
(21) Application number: 21905657.9
(22) Date of filing: 13.12.2021
(51) Int. Cl.: G06F 3/0481

(54) **METHOD FOR CROPPING APPLICATION INTERFACE, AND ELECTRONIC DEVICE**

(30) Priority: 16.12.2020 CN 202011486031
(71) Applicant: Huawei Technologies Co., Ltd., Shenzhen, Guangdong 518129 (CN)
(72) Inventor: WANG, Wei, Shenzhen, Guangdong 518129 (CN)
(74) Representative: Goddar, Heinz J.
(86) International application number: PCT/CN2021/137389
(87) International publication number: WO 2022/127728

(57) **Abstract**

This application discloses an application interface cropping method and an electronic device. According to the method, a floating window on the electronic device may display an application interface obtained by a user through cropping. The method includes: The electronic device receives a first instruction entered by the user, where the first instruction instructs the electronic device to determine a first cropping region on a displayed first interface of a first application. The electronic device obtains first cropping information corresponding to the first cropping region. The electronic device obtains a first layer corresponding to the first interface. The electronic device crops the first layer based on the first cropping information to obtain a second layer. The electronic device displays the first cropping region in a first window based on the second layer. Because a function button in the first cropping region in the floating window is not reduced, it is very convenient for the user to operate the function button in the first cropping region in the floating window.

## Description

This application claims priority to Chinese Patent Application No. 202011486031.4, filed with the China National Intellectual Property Administration on December 16, 2020 and entitled "APPLICATION INTERFACE CROPPING METHOD AND ELECTRONIC DEVICE", which is incorporated herein by reference in its entirety.

### TECHNICAL FIELD

This application relates to the field of terminal technologies, and more specifically, to an application interface cropping method and an electronic device.

### BACKGROUND

Currently, to maximize the use of a display screen of an electronic device, more and more users use a floating window to display an interface of application software. For example, to simultaneously view a playback interface of music software A and a chat interface of communication software B on a smartphone, a user may enable a display screen of the smartphone to display the chat interface of the communication software B, and display the playback interface of the music software A by using the floating window. In addition, the floating window is located at a top layer of the display screen, to prevent the floating window from being covered by the chat interface of the communication software B. If the floating window occupies a quarter of the display screen, the playback interface of the music software A is reduced to a quarter of the original by a same proportion.

In many cases, the user does not need to display all content of the playback interface of the music software A in the floating window, and only needs to display a part of content of the playback interface of the music software A in the floating window. For example, the user only uses a "Previous" button, a "Next" button, and a "Pause" button on the playback interface of the music software A.

A current operating system of the electronic device does not support display of some content of a playback interface of application software in the floating window, and the floating window can display only all content of the playback interface of the application software. Because function buttons on the playback interface of the application software in the floating window are also reduced by a same proportion, it is extremely inconvenient for the user to operate the function buttons on the playback interface in the floating window.

### SUMMARY

This application provides an application interface cropping method and an electronic device, so that a floating window on the electronic device may display an application interface obtained by a user through cropping.

According to a first aspect, this application provides an application interface cropping method, and the method includes: An electronic device receives a first instruction entered by a user, where the first instruction instructs the electronic device to determine a first cropping region on a displayed first interface of a first application. The electronic device obtains first cropping information corresponding to the first cropping region, where the first cropping information is for describing a position and a size of the first cropping region on the first interface. The electronic device obtains a first layer corresponding to the first interface, where the first layer is a layer obtained by the electronic device through drawing based on a configuration file of the first interface. The electronic device crops the first layer based on the first cropping information to obtain a second layer. The electronic device displays the first cropping region in the first window based on the second layer.

In the first aspect, after the user enters the first instruction to the electronic device, the electronic device may display, by performing internal processing, the first cropping region cropped by the user in the floating window, so that the floating window can be prevented from reducing the first interface of the first application for display. Because a function button in the first cropping region in the floating window is not reduced, it is very convenient for the user to operate the function button in the first cropping region in the floating window.

In a possible implementation of the first aspect, after the electronic device displays the first cropping region in the first window based on the second layer, the method further includes: The electronic device receives a first operation instruction entered by a user, where the first operation instruction is an instruction generated based on a first operation gesture. The electronic device deletes the first window. The electronic device displays a first icon corresponding to the first application.

When the user temporarily does not need to use the first window, the user may enter the first operation instruction to the electronic device, so that the electronic device deletes the first window and displays the first icon corresponding to the first application. When the user needs to use the first window, the user may perform an operation on the first icon, so that the electronic device may display the first window again.

In a possible implementation of the first aspect, after the electronic device displays the first icon corresponding to the first application, the method further includes: The electronic device receives a second operation instruction entered by the user, where the second operation instruction is an instruction generated based on a second operation gesture. The electronic device deletes the first icon. The electronic device displays the first cropping region in a first window based on the second layer.

When the electronic device displays the first icon corresponding to the first application, if the user enters the second operation instruction to the electronic device, the electronic device deletes the first icon, and displays the first cropping region in the first window based on the second layer, so as to switch the first icon to the first window.

In a possible implementation of the first aspect, after the electronic device displays the first icon corresponding to the first application, the method further includes: The electronic device receives a third operation instruction entered by the user, where the third operation instruction is an instruction generated based on a third operation gesture. The electronic device deletes the first icon. The electronic device displays the first interface and a cropping border, where the cropping border is for determining a display region that needs to be cropped on the first interface.

When the electronic device displays the first icon corresponding to the first application, if the user enters the third operation instruction to the electronic device, the electronic device deletes the first icon, and displays the first interface and the cropping border, so as to switch the first icon to the first interface and the cropping border.

In a possible implementation of the first aspect, after the electronic device displays the first icon corresponding to the first application, the method further includes: The electronic device receives a fourth operation instruction entered by the user, where the fourth operation instruction is an instruction generated based on a fourth operation gesture. The electronic device deletes the first icon. The electronic device displays the first interface.

When the electronic device displays the first icon corresponding to the first application, if the user enters the fourth operation instruction to the electronic device, the electronic device deletes the first icon, and displays the first interface, so as to switch the first icon to the first interface.

In a possible implementation of the first aspect, after the electronic device displays the first cropping region in the first window based on the second layer, the method further includes: The electronic device receives a fifth operation instruction entered by the user, where the fifth operation instruction is an instruction generated based on a fifth operation gesture. The electronic device deletes the first window. The electronic device displays the first interface and a cropping border, where the cropping border is for determining a display region that needs to be cropped on the first interface.

When the electronic device displays the first cropping region in the first window based on the second layer, if the user enters the fifth operation instruction to the electronic device, the electronic device deletes the first window, and displays the first interface and the cropping border, so as to switch the first window to the first interface and the cropping border.

In a possible implementation of the first aspect, after the electronic device displays the first cropping region in the first window based on the second layer, the method further includes: The electronic device receives a sixth operation instruction entered by the user, where the sixth operation instruction is an instruction generated based on a sixth operation gesture. The electronic device deletes the first window. The electronic device displays the first interface.

When the electronic device displays the first cropping region in the first window based on the second layer, if the user enters the sixth operation instruction to the electronic device, the electronic device deletes the first window and displays the first interface, so as to switch the first window to the first interface.

In a possible implementation of the first aspect, that an electronic device receives a first instruction entered by a user includes: The electronic device receives a first trigger instruction entered by a user, where the first trigger instruction instructs the electronic device to display a cropping border on a displayed first interface of a first application, and the cropping border is for determining a display region that needs to be cropped on the first interface. The electronic device displays the cropping border on the first interface. The electronic device receives a first adjustment instruction entered by the user, where the first adjustment instruction instructs the electronic device to adjust a shape of the cropping border, a size of the cropping border, and a relative position of the cropping border on the first interface. The electronic device receives a first cropping instruction entered by the user, where the first cropping instruction instructs the electronic device to determine a region in which the cropping border is located on the first interface as a first cropping region.

The first trigger instruction may enable the electronic device to display the cropping border, the first adjustment instruction may enable the electronic device to adjust the cropping border, and the first cropping instruction may enable the electronic device to determine a region in which the cropping border is located as the first cropping region.

In a possible implementation of the first aspect, that the electronic device crops the first layer based on the first cropping information to obtain a second layer includes: The electronic device determines a second cropping region on the first layer based on the first cropping information. The electronic device crops the second cropping region on the first layer to obtain the second layer.

In a possible implementation of the first aspect, the first cropping information includes a shape of the first cropping region, a size of the first cropping region, and a relative position of a center point of the first cropping region on the first interface.

According to a second aspect, this application provides an electronic device, including: a receiving module, configured to receive a first instruction entered by a user, where the first instruction instructs the electronic device to determine a first cropping region on a displayed first interface of a first application; a processing module, configured to: obtain first cropping information corresponding to the first cropping region, where the first cropping information is for describing a position and a size of the first cropping region on the first interface; obtain a first layer corresponding to the first interface, where the first layer is a layer obtained by the electronic device through drawing based on a configuration file of the first interface; and crop the first layer based on the first cropping information to obtain a second layer; and a display module, configured to display the first cropping region in a first window based on the second layer.

In a possible implementation of the second aspect, the receiving module is further configured to receive a first operation instruction entered by the user, where the first operation instruction is an instruction generated based on the first operation gesture. The processing module is further configured to: delete the first window; and display a first icon corresponding to the first application.

In a possible implementation of the second aspect, the receiving module is further configured to receive a second operation instruction entered by the user, where the second operation instruction is an instruction generated based on a second operation gesture. The processing module is further configured to: delete the first icon; and display the first cropping region in the first window based on the second layer.

In a possible implementation of the second aspect, the receiving module is further configured to receive a third operation instruction entered by the user, where the third operation instruction is an instruction generated based on the third operation gesture. The processing module is further configured to: delete the first icon; and display the first interface and a cropping border, where the cropping border is for determining a display region that needs to be cropped on the first interface.

In a possible implementation of the second aspect, the receiving module is further configured to receive a fourth operation instruction entered by the user, where the fourth operation instruction is an instruction generated based on a fourth operation gesture. The processing module is further configured to: delete the first icon; and display the first interface.

In a possible implementation of the second aspect, the receiving module is further configured to receive a fifth operation instruction entered by the user, where the fifth operation instruction is an instruction generated based on the fifth operation gesture. The processing module is further configured to: delete the first window; and display the first interface and a cropping border, where the cropping border is for determining a display region that needs to be cropped on the first interface.

In a possible implementation of the second aspect, the receiving module is further configured to receive a sixth operation instruction entered by the user, where the sixth operation instruction is an instruction generated based on a sixth operation gesture. The processing module is further configured to: delete the first window; and display the first interface.

In a possible implementation of the second aspect, the receiving module is specifically configured to receive a first trigger instruction entered by the user, where the first trigger instruction instructs the electronic device to display a cropping border on a displayed first interface of a first application, and the cropping border is for determining a display region that needs to be cropped on the first interface; receive a first adjustment instruction entered by the user, the first adjustment instruction instructs the electronic device to adjust a shape of the cropping border, a size of the cropping border, and a relative position of the cropping border on the first interface; and receive a first cropping instruction entered by the user, where the first cropping instruction instructs the electronic device to determine a region in which the cropping border is located on the first interface as a first cropping region. The display module is further configured to display the cropping border on the first interface.

In a possible implementation of the second aspect, the processing module is specifically configured to: determine a second cropping region on the first layer based on the first cropping information; and crop the second cropping region on the first layer to obtain the second layer.

In a possible implementation of the second aspect, the first cropping information includes a shape of the first cropping region, a size of the first cropping region, and a relative position of a center point of the first cropping region on the first interface.

According to a third aspect, this application provides an electronic device, including one or more processors and a memory. The one or more processors are configured to read software code stored in the memory and perform the first aspect and each possible implementation of the first aspect.

According to a fourth aspect, this application provides a computer-readable storage medium. The computer-readable storage medium stores software code. When read by one or more processors, the software code can perform the method according to the first aspect or each possible implementation of the first aspect.

### BRIEF DESCRIPTION OF DRAWINGS

FIG. 1 is a schematic diagram of a desktop of a smartphone 100 according to this application;
FIG. 2 is a flowchart of an application interface cropping method according to this application;
FIG. 3 is a schematic diagram of a playback interface 102 of Music software 101 according to this application;
FIG. 4 is a schematic diagram of displaying a cropping border 104 on a playback interface 102 according to this application;
FIG. 5 is a schematic diagram of displaying a first cropping region 105 of a playback interface 102 in a floating window 109 according to this application;
FIG. 6 is a schematic diagram in which a user taps an icon of Messages 114 by using a finger according to this application;
FIG. 7 is a schematic diagram of simultaneously displaying a chat interface 115 of Messages 114 and a floating window 109 on a display screen of a smartphone 100 according to this application;
FIG. 8 is a schematic diagram of conversion of a floating window 109 according to this application;
FIG. 9 is a flowchart of another application interface cropping method according to this application;
FIG. 10 is a schematic diagram of converting a floating window 109 into a floating icon 118 according to this application;
FIG. 11 is a schematic diagram of conversion of a floating icon 118 according to this application;
FIG. 12 is a schematic diagram of an electronic device according to this application; and
FIG. 13 is a schematic diagram of another electronic device according to this application.

### DESCRIPTION OF EMBODIMENTS

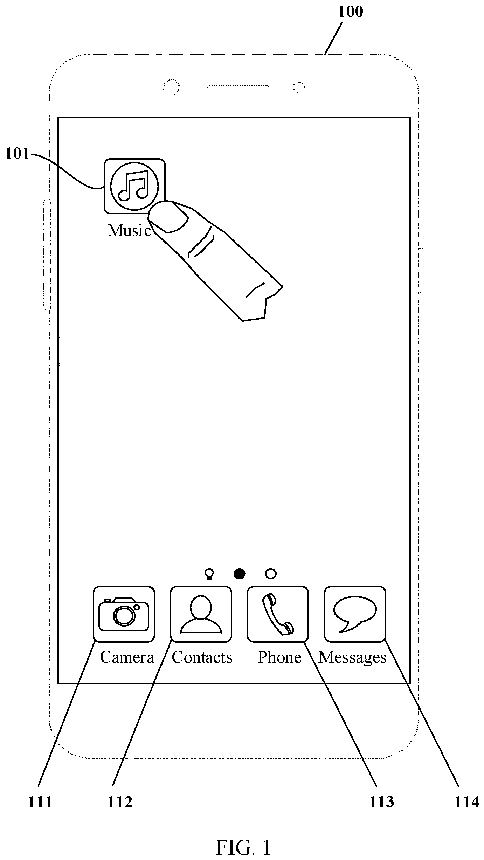

Refer to FIG. 1, FIG. 1 is a schematic diagram of a desktop of a smartphone 100 according to this application. In an example shown in FIG. 1, application software such as Music software 101, Camera 111, Contacts 112, Phone 113, and Messages 114 are installed in a smartphone 100. By using an application interface cropping method provided in this application, a floating window on the smartphone 100 may display a part of an interface of the application software cropped by a user. The following describes in detail the application interface cropping method provided in this application.

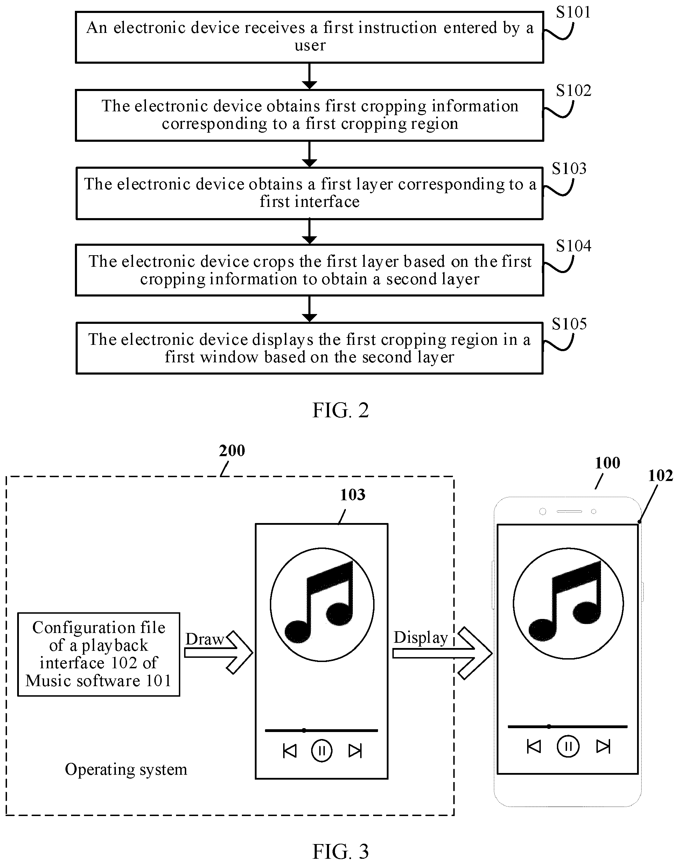

Refer to FIG. 2, FIG. 2 is a flowchart of an application interface cropping method according to this application. The application interface cropping method shown in FIG. 2 is applied to an electronic device, and the electronic device may be a device such as a smartphone or a tablet computer. The method shown in FIG. 2 includes steps S101 to S105.

S 101. An electronic device receives a first instruction entered by a user.

The first instruction instructs the electronic device to determine a first cropping region on a displayed first interface of a first application.

In an implementation, the first instruction is a cropping instruction entered by the user. Specifically, when the electronic device displays the first interface of the first application, the user may draw a region on the first interface by using a finger joint, and the electronic device may determine the region drawn by the user as the first cropping region.

In another implementation, the first instruction includes a plurality of instructions entered by the user. S101 may specifically include steps S1011 to S1014:

S1011. The electronic device receives a first trigger instruction entered by the user.

The first trigger instruction instructs the electronic device to display a cropping border on the displayed first interface of the first application, and the cropping border is for determining a display region that needs to be cropped on the first interface.

Specifically, the electronic device presets a shape of the cropping border, and the user may select the shape of the cropping border in advance, so that after the electronic device receives the first trigger instruction entered by the user, the electronic device may display the shape of the cropping border that is selected by the user in advance.

For example, it is assumed that the shape of the cropping border preset in the electronic device includes a square, a rectangle, a circle, an oval, an irregular shape, and the like. The user may select a shape of the cropping border in the electronic device in advance.

S1012. The electronic device displays a cropping border on the first interface.

S1013. The electronic device receives a first adjustment instruction entered by the user.

The first adjustment instruction instructs the electronic device to adjust the shape of the cropping border, a size of the cropping border, and a relative position of the cropping border on the first interface.

S1014. The electronic device receives a first cropping instruction entered by the user.

The first cropping instruction instructs the electronic device to determine a region in which the cropping border is located on the first interface as the first cropping region.

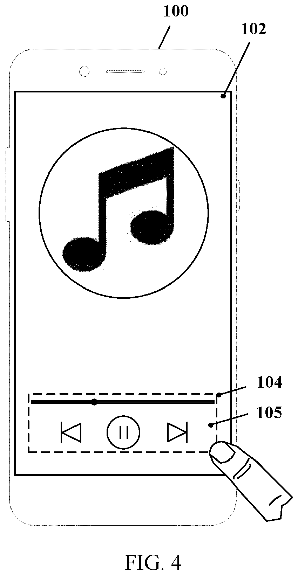

To better describe technical details of steps S1011 to S1014, the following is shown with reference to FIG. 1, FIG. 3, and FIG. 4. FIG. 3 is a schematic diagram of a playback interface 102 of Music software 101 according to this application. FIG. 4 is a schematic diagram of displaying a cropping border 104 on a playback interface 102 according to this application.

In the example shown in FIG. 1, when the user taps an icon of Music software 101 on a desktop of the smartphone 100 by using a finger, the smartphone 100 starts Music software 101.

In an example shown in FIG. 3, an operating system 200 is an operating system of the smartphone 100. After the smartphone 100 starts Music software 101, the operating system 200 draws a layer 103 based on a configuration file of the playback interface 102 of Music software 101. The operating system 200 sends the layer 103 corresponding to the playback interface 102 to a display screen of the smartphone 100. The display screen of the smartphone 100 displays the playback interface 102 based on the layer 103.

In an example shown in FIG. 4, after the display screen of the smartphone 100 displays the playback interface 102 based on the layer 103, if the user wants to display a partial region of the playback interface 102 in a floating window on the smartphone 100, the user may enter the first trigger instruction to the smartphone 100, so that the smartphone 100 displays the cropping border 104 on the playback interface 102.

For example, the user may press a physical button on the smartphone 100, to input the first trigger instruction into the smartphone 100. Alternatively, the user may enter a special gesture on the display screen of the smartphone 100, to input the first trigger instruction into the smartphone 100. Specifically, the special gesture may be the finger joint tapping on the display screen of the smartphone 100.

In the example shown in FIG. 4, after the smartphone 100 displays the cropping border 104, the user may drag the cropping border 104 to any position of the playback interface 102 by using the finger, or may change the size of the cropping border 104 by using the finger, to input the first adjustment instruction to the smartphone 100. After the user determines the position and the size of the cropping border 104, the user may tap a virtual button or the physical button by using the finger, to input the first cropping instruction to the smartphone 100, so that the smartphone 100 determines a region in which the cropping border 104 is located on the playback interface 102 as a first cropping region 105.

S 102. The electronic device obtains first cropping information corresponding to the first cropping region

The first cropping information is for describing a position and a size of the first cropping region on the first interface. Specifically, the first cropping information includes a shape of the first cropping region, a size of the first cropping region, and a relative position of a center point of the first cropping region on the first interface.

S103. The electronic device obtains a first layer corresponding to the first interface.

The first layer is a layer obtained by the electronic device through drawing based on a configuration file of the first interface.

S104. The electronic device crops the first layer based on the first cropping information to obtain a second layer.

In an implementation, S104 includes the following steps: The electronic device determines a second cropping region on the first layer based on the first cropping information, and crops the second cropping region on the first layer to obtain the second layer.

S105. The electronic device displays the first cropping region in a first window based on the second layer.

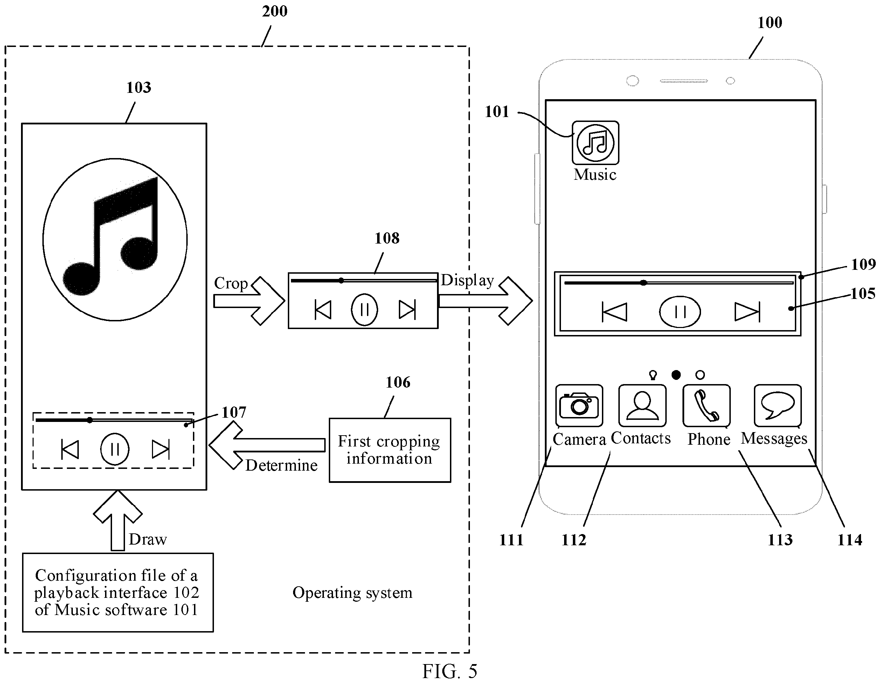

To better describe technical details of steps S102 to S105, the following is shown with reference to FIG. 4 and FIG. 5. FIG. 5 is a schematic diagram of displaying a first cropping region 105 of a playback interface 102 in a floating window 109 according to this application.

In examples shown in FIG. 4 and FIG. 5, after the smartphone 100 determines the region in which the cropping border 104 is located on the playback interface 102 as the first cropping region 105, the operating system 200 obtains the first cropping information 106 corresponding to the first cropping region 105. Specifically, the first cropping information 106 includes a shape of the first cropping region 105, a size of the first cropping region 105, and a relative position of a center point of the first cropping region 105 on the first interface 102. Then, the operating system 200 draws the layer 103 based on the configuration file of the playback interface 102 of Music software 101. Next, the operating system 200 determines the second cropping region 107 on the layer 103 based on the first cropping information 106. Afterward, the operating system 200 crops the second cropping region 107 on the layer 103 to obtain a layer 108, and sends the layer 108 to the display screen of the smartphone 100. Finally, the display screen of the smartphone 100 displays the first cropping region 105 of the playback interface 102 in the floating window 109 based on the layer 108.

It may be learned from the examples in FIG. 4 and FIG. 5 that, because the floating window 109 occupies only a partial display region of the display screen of the smartphone 100, when the display screen of the smartphone 100 displays the floating window 109, the display screen of the smartphone 100 can further display an icon of Music software 101, an icon of Camera 111, an icon of Contacts 112, an icon of Phone 113, and an icon of Messages 114 on the desktop of the smartphone 100.

In embodiments shown in FIG. 2, after the user enters the first instruction to the electronic device, the electronic device may display, by performing internal processing, the first cropping region cropped by the user in the floating window, so as to prevent the floating window from reducing the first interface of the first application for display. Because a function button in the first cropping region in the floating window is not reduced, it is very convenient for the user to operate the function button in the first cropping region in the floating window.

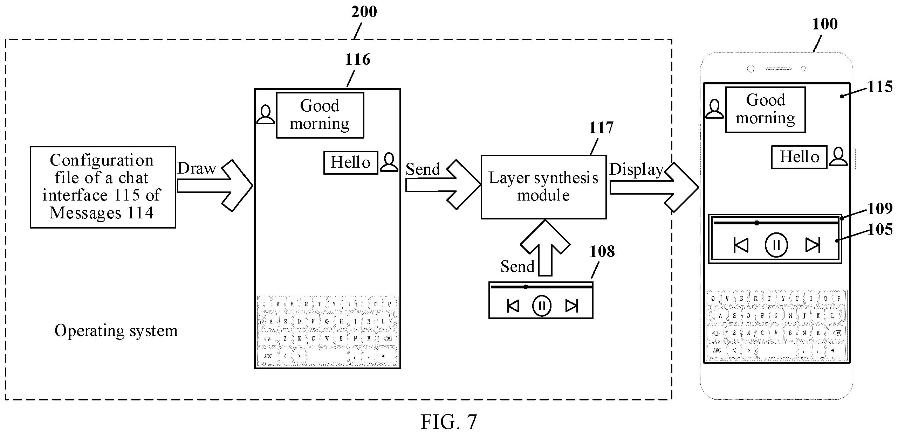

Refer to FIG. 5, FIG. 6, and FIG. 7, FIG. 6 is a schematic diagram in which a user taps an icon of Messages 114 by using a finger according to this application. FIG. 7 is a schematic diagram of simultaneously displaying a chat interface 115 of Messages 114 and a floating window 109 on a display screen of a smartphone 100 according to this application.

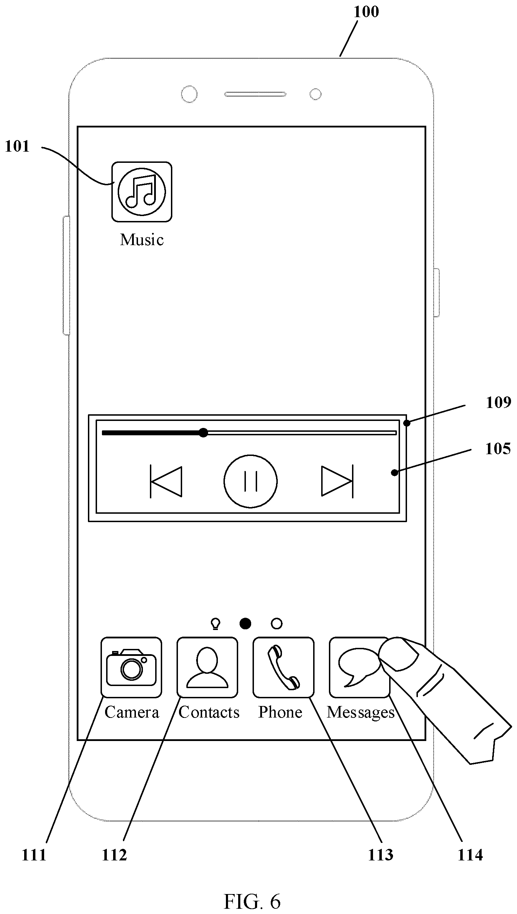

In examples shown in FIG. 5 and FIG. 6, after the smartphone 100 displays the first cropping region 105 of the playback interface 102 in the floating window 109 based on the layer 108, if the user needs to start Messages 114, the user may tap the icon of Messages 114 by using the finger, and the smartphone 100 starts Messages 114.

In an example shown in FIG. 7, after the smartphone 100 starts Messages 114, the operating system 200 draws a layer 116 based on a configuration file of the chat interface 115 of Messages 114, and sends the layer 116 to a layer synthesis module 117. Because the display screen of the smartphone 100 also needs to display the layer 108 in the floating window 109, the operating system 200 further obtains a layer 108 that is cropped in advance, and sends the layer 108 to the layer synthesis module 117. In a process in which the layer synthesis module 117 synthesizes the layer 116 and the layer 108, because a display priority of the layer 108 is higher than a display priority of the layer 116, the layer synthesis module 117 covers the layer 108 on an upper part of the layer 116, to avoid that the layer 108 is blocked by the layer 116. After the layer synthesis module 117 synthesizes the layer 116 and the layer 108, the layer synthesis module 117 sends a synthesized layer 116 and the layer 108 to the display screen of the smartphone 100. After the display screen of the smartphone 100 receives the synthesized layer 116 and the layer 108 that are sent by the layer synthesis module 117, the display screen of the smartphone 100 displays the chat interface 115 of Messages 114 in full screen based on the layer 116, and displays the first cropping region 105 of the playback interface 102 of Music software 101 in the floating window 109 based on the layer 108.

In an example shown in FIG. 7, the chat interface 115 of Messages 114 is displayed on the display screen of the smartphone 100, and a floating box 109 is further displayed on the upper part of the chat interface 115. The first cropping region 105 of the playback interface 102 of Music software 101 is displayed in the floating box 109. Because the user only needs to use a "Previous" button, a "Next" button, and a "Pause" button in the first cropping region 105 of the playback interface 102 of Music software 101, according to the application interface cropping method provided in this application, the floating window 109 on the smartphone 100 may display only the first cropping region 105 after the user cropping, and display the chat interface 115 of Messages 114 in a region other than the floating window 109, so that the user may simultaneously use a function button in the first cropping region 105 of Music software 101 and a function button in the chat interface 115 of Messages 114 on the smartphone 100.

In a possible implementation of embodiments shown in FIG. 2, after S105, the following steps may further be included: The electronic device receives a fifth operation instruction entered by the user, where the fifth operation instruction is an instruction generated based on a fifth operation gesture. The electronic device deletes the first window. The electronic device displays the first interface and a cropping border. The cropping border is for determining a display region that needs to be cropped on the first interface.

When the electronic device displays the first cropping region in the first window based on the second layer, if the user enters the fifth operation instruction to the electronic device, the electronic device deletes the first window, and displays the first interface and the cropping border, so as to switch the first window to the first interface and the cropping border.

In another possible implementation of embodiments shown in FIG. 2, after S105, the following steps may further be included: The electronic device receives a sixth operation instruction entered by the user, where the sixth operation instruction is an instruction generated based on a sixth operation gesture. The electronic device deletes the first window. The electronic device displays a first interface.

When the electronic device displays the first cropping region in the first window based on the second layer, if the user enters the sixth operation instruction to the electronic device, the electronic device deletes the first window and displays the first interface, so as to switch the first window to the first interface.

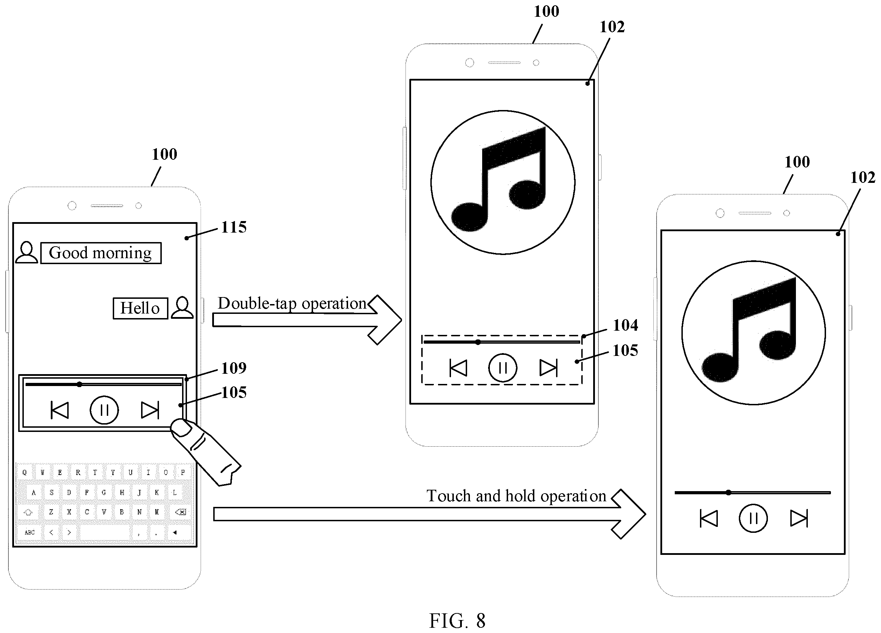

To better describe technical details of the foregoing two types of interface switching, refer to an example shown in FIG. 8. FIG. 8 is a schematic diagram of conversion of a floating window 109 according to this application.

In the example shown in FIG. 8, after the display screen of the smartphone 100 displays the chat interface 115 of Messages 114 and the floating window 109, if the user does not need the floating window 109 temporarily, the user may enter the fifth operation gesture to the smartphone 100, so that the smartphone 100 generates the fifth operation instruction based on the fifth operation gesture. The smartphone 100 deletes the floating window 109 based on an indication of the fifth operation instruction, and displays the playback interface 102 and the cropping border 104 of Music software 101. Specifically, the fifth operation gesture is a double-tap operation entered by the user on the floating window 109 by using the finger.

In the example shown in FIG. 8, after the display screen of the smartphone 100 displays the chat interface 115 of Messages 114 and the floating window 109, if the user does not need the floating window 109 temporarily, the user may enter the sixth operation gesture to the smartphone 100, so that the smartphone 100 generates the sixth operation instruction based on the sixth operation gesture. The smartphone 100 deletes the floating window 109 based on an indication of the sixth operation instruction, and displays the playback interface 102 of Music software 101. Specifically, the sixth operation gesture is a touch and hold operation entered by the user on the floating window 109 by using the finger.

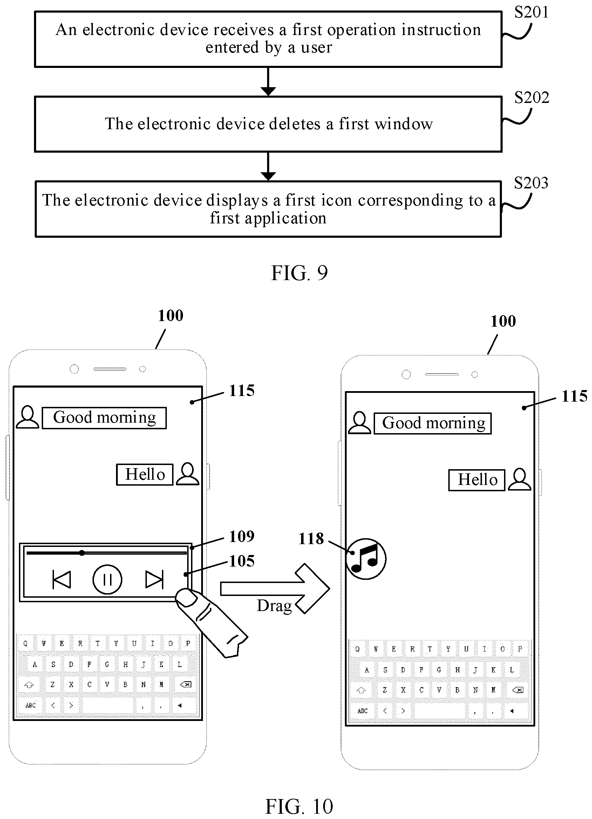

Refer to FIG. 9, FIG. 9 is a flowchart of another application interface cropping method according to this application. After step S105 in FIG. 2, the application interface cropping method provided in this application may further include the method shown in FIG. 9. The method shown in FIG. 9 includes steps S201 to S203.

S201. An electronic device receives a first operation instruction entered by a user.

The first operation instruction is an instruction generated based on a first operation gesture. Specifically, the first operation gesture is that the user drags the first window to an edge region of a display screen of the electronic device by using a finger.

S202. The electronic device deletes the first window.

S203. The electronic device displays a first icon corresponding to a first application.

In embodiments shown in FIG. 9, when the user does not need to use the first window temporarily, the user may enter the first operation instruction to the electronic device, so that the electronic device deletes the first window and displays the first icon corresponding to the first application. When the user needs to use the first window, the user may perform an operation on the first icon, so that the electronic device may display the first window again.

To better describe technical details of steps S201 to S203, with reference to FIG. 10, FIG. 10 is a schematic diagram of converting a floating window 109 into a floating icon 118 according to this application.

In the example shown in FIG. 10, after the display screen of the smartphone 100 displays the chat interface 115 of Messages 114 and the floating window 109, if the user does not need the floating window 109 temporarily, the user may enter the first operation gesture to the smartphone 100, so that the smartphone 100 generates the first operation instruction based on the first operation gesture. The smartphone 100 deletes the floating window 109 based on an indication of the first operation instruction, and displays the floating icon 118 corresponding to Music software 101 in an edge region of the display screen of the smartphone 100. Specifically, the first operation gesture is that the user drags the floating window 109 to the edge region of the display screen of the smartphone 100 by using the finger.

In a possible implementation of embodiments shown in FIG. 9, after S203, the following steps may further be included: The electronic device receives a second operation instruction entered by the user, where the second operation instruction is an instruction generated based on a second operation gesture. The electronic device deletes a first icon. The electronic device displays the first cropping region in a first window based on the second layer.

When the electronic device displays the first icon corresponding to the first application, if the user enters the second operation instruction to the electronic device, the electronic device deletes the first icon, and displays the first cropping region in the first window based on the second layer, so as to switch the first icon to the first window.

In another possible implementation of embodiments shown in FIG. 9, after S203, the following steps may further be included: The electronic device receives a third operation instruction entered by the user, where the third operation instruction is an instruction generated based on the third operation gesture. The electronic device deletes a first icon. The electronic device displays the first interface and a cropping border. The cropping border is for determining a display region that needs to be cropped on the first interface.

When the electronic device displays the first icon corresponding to the first application, if the user enters the third operation instruction to the electronic device, the electronic device deletes the first icon, and displays the first interface and the cropping border, so as to switch the first icon to the first interface and the cropping border.

In still another possible implementation of embodiments shown in FIG. 9, after S203, the following steps may further be included: The electronic device receives a fourth operation instruction entered by the user, where the fourth operation instruction is an instruction generated based on a fourth operation gesture. The electronic device deletes a first icon. The electronic device displays a first interface.

When the electronic device displays the first icon corresponding to the first application, if the user enters the fourth operation instruction to the electronic device, the electronic device deletes the first icon, and displays the first interface, so as to switch the first icon to the first interface.

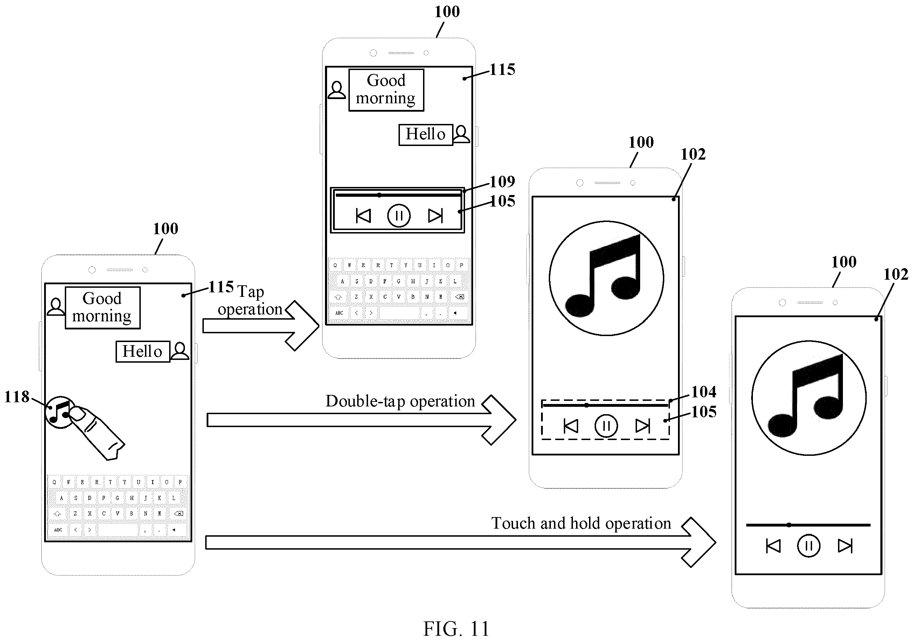

To better describe technical details of the foregoing three types of interface switching, with reference to FIG. 11, FIG. 11 is a schematic diagram of conversion of a floating icon 118 according to this application.

In the example shown in FIG. 11, after the floating icon 118 corresponding to Music software 101 is displayed in the edge region of the display screen of the smartphone 100, if the user expects the smartphone 100 to display the first cropping region 105 of the playback interface 102 of Music software 101 again in the floating box 109, the user may enter the second operation gesture to the smartphone 100, so that the smartphone 100 generates the second operation instruction based on the second operation gesture. The smartphone 100 deletes the floating icon 118 based on an indication of the second operation instruction, and displays the first cropping region 105 in the floating window 109 based on the layer 108. Specifically, the second operation gesture is a tap operation entered by the user on the floating icon 118 by using the finger.

In the example shown in FIG. 11, after the floating icon 118 corresponding to Music software 101 is displayed in the edge region of the display screen of the smartphone 100, if the user expects the smartphone 100 to display the playback interface 102 and the cropping border 104 of Music software 101 again, the user may enter the third operation gesture to the smartphone 100, so that the smartphone 100 generates the third operation instruction based on the third operation gesture. The smartphone 100 deletes the floating icon 118 based on an indication of the third operation instruction, and displays the playback interface 102 and the cropping border 104 of Music software 101. Specifically, the third operation gesture is a double-tap operation entered by the user on the floating icon 118 by using the finger.

In the example shown in FIG. 11, after the floating icon 118 corresponding to Music software 101 is displayed in the edge region of the display screen of the smartphone 100, if the user expects the smartphone 100 to display the playback interface 102 of Music software 101 again, the user may enter the fourth operation gesture to the smartphone 100, so that the smartphone 100 generates the fourth operation instruction based on the fourth operation gesture. The smartphone 100 deletes the floating icon 118 based on an indication of the fourth operation instruction, and displays the playback interface 102 of Music software 101. Specifically, the fourth operation gesture is a touch and hold operation entered by the user on the floating icon 118 by using the finger.

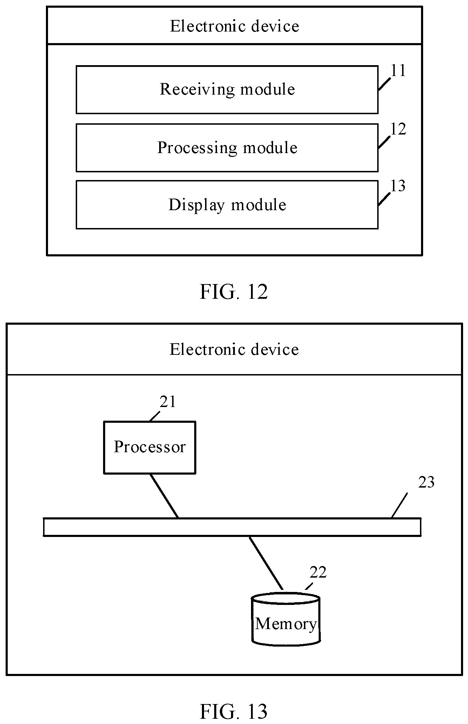

Refer to FIG. 12, FIG. 12 is a schematic diagram of an electronic device according to this application. A first device shown in FIG. 12 includes a receiving module 11, a processing module 12, and a display module 13.

The receiving module 11 is configured to receive a first instruction entered by a user, where the first instruction instructs the electronic device to determine a first cropping region on a displayed first interface of a first application.

The processing module 12 is configured to: obtain first cropping information corresponding to the first cropping region, where the first cropping information is for describing a position and a size of the first cropping region on the first interface; obtain a first layer corresponding to the first interface, where first layer is a layer obtained by the electronic device through drawing based on a configuration file of the first interface; and crop the first layer based on the first cropping information to obtain a second layer.

The display module 13 is configured to display the first cropping region in the first window based on the second layer.

In embodiments shown in FIG. 12, for additional functions that can be implemented by each module and more details about implementing the foregoing functions, refer to the description in the foregoing method embodiment shown in FIG. 2. Details are not repeated herein.

The apparatus embodiment in FIG. 12 is merely an example. For example, the module division is merely logical function division and may be other division during actual implementation. For example, a plurality of modules or components may be combined or integrated into another system, or some features may be ignored or not performed. Functional modules in embodiments of this application may be integrated into one processing module, or each module may exist alone physically, or two or more modules may be integrated into one module.

Refer to FIG. 13, FIG. 13 is a schematic diagram of another electronic device according to this application. The electronic device shown in FIG. 13 includes a processor 21 and a memory 22.

In embodiments shown in FIG. 13, the processor 21 is configured to perform an instruction stored in the memory 22, so that the electronic device performs the following operations: Receive a first instruction entered by a user, where the first instruction instructs the electronic device to determine a first cropping region on a displayed first interface of a first application. Obtain first cropping information corresponding to the first cropping region, where the first cropping information is for describing a position and a size of the first cropping region on the first interface; obtain a first layer corresponding to the first interface, where first layer is a layer obtained by the electronic device through drawing based on a configuration file of the first interface; and crop the first layer based on the first cropping information to obtain a second layer. Display the first cropping region in the first window based on the second layer.

The processor 21 is one or more CPUs. Optionally, the CPU is a single-core CPU or a multi-core CPU.

The memory 22 includes, but is not limited to, a random access memory (random access memory, RAM), a read only memory (Read only Memory, ROM), and an erasable programmable read-only memory (erasable programmable read-only memory, EPROM or flash memory), a flash memory, an optical memory, or the like. The memory 22 stores code of the operating system.

Optionally, the electronic device further includes a bus 23, and the processor 21 and the memory 22 are connected to each other through the bus 23, or may be connected to each other in another manner.

Embodiments in this specification are all described in a progressive manner, mutual reference may be made to the same or similar part of the embodiments, and each embodiment focuses on illustrating a difference from other embodiments. In particular, for a system embodiment, since it is basically similar to a method embodiment, the system embodiment is described simply, and the relevant part may be obtained with reference to the part of the description of the method embodiment.

Apparently, a person skilled in the art can make various modifications and variations to the present invention without departing from the scope of the present invention. In this case, if the modifications and variations of this application fall within the scope of the claims of the present intention, the present invention also intends to include the modifications and variations.

## Claims

1. An application interface cropping method, wherein the method comprises:
receiving, by an electronic device, a first instruction entered by a user, wherein the first instruction instructs the electronic device to determine a first cropping region on a displayed first interface of a first application;
obtaining, by the electronic device, first cropping information corresponding to the first cropping region, wherein the first cropping information is for describing a position and a size of the first cropping region on the first interface;
obtaining, by the electronic device, a first layer corresponding to the first interface, wherein the first layer is a layer obtained by the electronic device through drawing based on a configuration file of the first interface;
cropping, by the electronic device, the first layer based on the first cropping information to obtain a second layer; and
displaying, by the electronic device, the first cropping region in a first window based on the second layer.

2. The application interface cropping method according to claim 1, wherein after the displaying, by the electronic device, the first cropping region in a first window based on the second layer, the method further comprises:
receiving, by the electronic device, a first operation instruction entered by the user, wherein the first operation instruction is an instruction generated based on a first operation gesture;
deleting, by the electronic device, the first window; and
displaying, by the electronic device, a first icon corresponding to the first application.

3. The application interface cropping method according to claim 2, wherein after the displaying, by the electronic device, a first icon corresponding to the first application, the method further comprises:
receiving, by the electronic device, a second operation instruction entered by the user, wherein the second operation instruction is an instruction generated based on a second operation gesture;
deleting, by the electronic device, the first icon; and
displaying, by the electronic device, the first cropping region in the first window based on the second layer.

4. The application interface cropping method according to claim 2, wherein after the displaying, by the electronic device, a first icon corresponding to the first application, the method further comprises:
receiving, by the electronic device, a third operation instruction entered by the user, wherein the third operation instruction is an instruction generated based on a third operation gesture;
deleting, by the electronic device, the first icon; and
displaying, by the electronic device, the first interface and a cropping border, wherein the cropping border is for determining a display region that needs to be cropped on the first interface.

5. The application interface cropping method according to claim 2, wherein after the displaying, by the electronic device, a first icon corresponding to the first application, the method further comprises:
receiving, by the electronic device, a fourth operation instruction entered by the user, wherein the fourth operation instruction is an instruction generated based on a fourth operation gesture;
deleting, by the electronic device, the first icon; and
displaying, by the electronic device, the first interface.

6. The application interface cropping method according to claim 1, wherein after the displaying, by the electronic device, the first cropping region in a first window based on the second layer, the method further comprises:
receiving, by the electronic device, a fifth operation instruction entered by the user, wherein the fifth operation instruction is an instruction generated based on a fifth operation gesture;
deleting, by the electronic device, the first window; and
displaying, by the electronic device, the first interface and a cropping border, wherein the cropping border is for determining a display region that needs to be cropped on the first interface.

7. The application interface cropping method according to claim 1, wherein after the displaying, by the electronic device, the first cropping region in a first window based on the second layer, the method further comprises:
receiving, by the electronic device, a sixth operation instruction entered by the user, wherein the sixth operation instruction is an instruction generated based on a sixth operation gesture;
deleting, by the electronic device, the first window; and
displaying, by the electronic device, the first interface.

8. The application interface cropping method according to any one of claims 1 to 7, wherein the receiving, by an electronic device, a first instruction entered by a user comprises:
receiving, by the electronic device, a first trigger instruction entered by the user, wherein the first trigger instruction instructs the electronic device to display the cropping border on the displayed first interface of the first application, and the cropping border is for determining the display region that needs to be cropped on the first interface;
displaying, by the electronic device, the cropping border on the first interface;
receiving, by the electronic device, a first adjustment instruction entered by the user, wherein the first adjustment instruction instructs the electronic device to adjust a shape of the cropping border, a size of the cropping border, and a relative position of the cropping border on the first interface; and
receiving, by the electronic device, a first cropping instruction entered by the user, wherein the first cropping instruction instructs the electronic device to determine a region in which the cropping border is located on the first interface as the first cropping region.

9. The application interface cropping method according to any one of claims 1 to 7, wherein the cropping, by the electronic device, the first layer based on the first cropping information to obtain a second layer comprises:
determining, by the electronic device, a second cropping region on the first layer based on the first cropping information; and
cropping, by the electronic device, the second cropping region on the first layer to obtain the second layer.

10. The application interface cropping method according to any one of claims 1 to 7, wherein
the first cropping information comprises a shape of the first cropping region, a size of the first cropping region, and a relative position of a center point of the first cropping region on the first interface.

11. An electronic device, comprising:
a receiving module, configured to receive a first instruction entered by a user, wherein the first instruction instructs the electronic device to determine a first cropping region on a displayed first interface of a first application;
a processing module, configured to: obtain first cropping information corresponding to the first cropping region, wherein the first cropping information is for describing a position and a size of the first cropping region on the first interface; obtain a first layer corresponding to the first interface, wherein the first layer is a layer obtained by the electronic device through drawing based on a configuration file of the first user interface; and crop the first layer based on the first cropping information to obtain a second layer; and
a display module, configured to display the first cropping region in a first window based on the second layer.

12. The electronic device according to claim 11, wherein
the receiving module is further configured to receive a first operation instruction entered by the user, wherein the first operation instruction is an instruction generated based on a first operation gesture; and
the processing module is further configured to: delete the first window; and display a first icon corresponding to the first application.

13. The electronic device according to claim 12, wherein
the receiving module is further configured to receive a second operation instruction entered by the user, wherein the second operation instruction is an instruction generated based on a second operation gesture; and
the processing module is further configured to: delete the first icon; and display the first cropping region in the first window based on the second layer.

14. The electronic device according to claim 12, wherein
the receiving module is further configured to receive a third operation instruction entered by the user, wherein the third operation instruction is an instruction generated based on a third operation gesture; and
the processing module is further configured to: delete the first icon; and display the first interface and a cropping border, wherein the cropping border is for determining a display region that needs to be cropped on the first interface.

15. The electronic device according to claim 12, wherein
the receiving module is further configured to receive a fourth operation instruction entered by the user, wherein the fourth operation instruction is an instruction generated based on a fourth operation gesture; and
the processing module is further configured to: delete the first icon; and display the first interface.

16. The electronic device according to claim 11, wherein
the receiving module is further configured to receive a fifth operation instruction entered by the user, wherein the fifth operation instruction is an instruction generated based on a fifth operation gesture; and
the processing module is further configured to: delete the first window; and display the first interface and a cropping border, wherein the cropping border is for determining a display region that needs to be cropped on the first interface.

17. The electronic device according to claim 11, wherein
the receiving module is further configured to receive a sixth operation instruction entered by the user, wherein the sixth operation instruction is an instruction generated based on a sixth operation gesture; and
the processing module is further configured to: delete the first window; and display the first interface.

18. The electronic device according to any one of claims 11 to 17, wherein
the receiving module is specifically configured to receive a first trigger instruction entered by the user, wherein the first trigger instruction instructs the electronic device to display the cropping border on the displayed first interface of the first application, and the cropping border is for determining the display region that needs to be cropped on the first interface; receive a first adjustment instruction entered by the user, wherein the first adjustment instruction instructs the electronic device to adjust a shape of the cropping border, a size of the cropping border, and a relative position of the cropping border on the first interface; and receive a first cropping instruction entered by the user, wherein the first cropping instruction instructs the electronic device to determine a region in which the cropping border is located on the first interface as a first cropping region; and
the display module is further configured to display the cropping border on the first interface.

19. The electronic device according to any one of claims 11 to 17, wherein
the processing module is specifically configured to: determine a second cropping region on the first layer based on the first cropping information; and crop the second cropping region on the first layer to obtain the second layer.

20. The electronic device according to any one of claims 11 to 17, wherein
the first cropping information comprises a shape of the first cropping region, a size of the first cropping region, and a relative position of a center point of the first cropping region on the first interface.

21. An electronic device, comprising one or more processors and a memory, wherein
the one or more processors are configured to read software code stored in the memory and perform the method according to any one of claims 1 to 10.
